# EUROPEAN PATENT SPECIFICATION

(11) **EP 1 288 288 B1**
(45) Date of publication and mention of the grant of the patent: **14.12.2005**
(21) Application number: 01830551.6
(22) Date of filing: 29.08.2001
(51) Int. Cl.: C12F 3/00, C12H 1/06

(54) **Process and plant for calcium tartrate extraction from wine-making by-products**
Verfahren und Anlage zur Extraktion von Calciumtartrat aus Nebenprodukten der Weinherstellung
Procédé et appareil d'extraction de tartrate de calcium des sous-produits de la préparation du vin

(43) Date of publication of application: 05.03.2003
(73) Proprietor: Balice Distillati S.r.l., 70020 Loseto (BA) (IT)
(72) Inventor: Balice, Gennaro, c/o Balice Distillati S.r.l., Via, 70020 Loseto (BA) (IT)
(74) Representative: Botti, Mario

(56) References cited:
- EP-A- 0 319 366
- DE-C- 2 759 801
- DE-C- 3 244 221
- FR-A- 925 322
- FR-A- 2 511 701
- GB-A- 1 588 273
- US-A- 2 903 372
- US-A- 5 908 240
- HAUSHOFER ET AL.: "Die Förderung der Weinsteinausscheidung bei Weinen durch Zugabe von Impfkristallen, Kratzen an Glaswänden und Anwendung von Ultraschall" MITTEILUNGEN KLOSTERNEUBURG REBE UND WEIN, OBSTBAU UND FRÜCHTEVERWERTUNG, vol. 23, no. 4, 1973, pages 259-284, XP001063988
- PATENT ABSTRACTS OF JAPAN vol. 015, no. 313 (C-0857), 9 August 1991 (1991-08-09) & JP 03 118892 A (MITSUBISHI ELECTRIC CORP), 21 May 1991 (1991-05-21)
- PATENT ABSTRACTS OF JAPAN vol. 2000, no. 06, 22 September 2000 (2000-09-22) & JP 2000 084403 A (AGENCY OF IND SCIENCE &TECHNOL; UNIV NAGOYA; HONDA ELECTRONIC CO L), 28 March 2000 (2000-03-28)

## Description

### Field of Application

The present invention relates to a process and a plant for extracting calcium tartrate from wine-making by-products, such as dregs and marc, in particular from wine marc *['borlanda' in Italian].*

As it is known, extracting calcium tartrate from by-products of a wine-making process such as dregs and marc is common practice. For this purpose, said by-products are preliminarily processed diluted with water and dealcoholized in fractioning columns, thereby obtaining the so called wine marc. Calcium tartrate forms in consequence of the wine marc being neutralized with calcium salts (calcium carbonate, calcium sulphate, or calcium chloride), and remains suspended therein in form of crystals.

According to the prior art, to extract calcium tartrate from wine marc, the wine marc is centrifugally treated through banks of serially arranged cyclone separators along which the concentration of the calcium tartrate increases up to the last final cyclone.

The cyclones are particle separators and are structured in such a way that the suspension intlet from which the heaviest fraction is to be separated occurs tangentially to a cylinder, which cylinder has a terminal cone at the bottom and a pipe and a regulation valve at the top.

The suspension is pumped by a centrifugal pump and caused to swirl inside the cyclone cylinder such that a centrifugal force is generated whereby the heaviest particles, the tartrate crystals in this case, are urged against the walls and then discharged through the underlying cone while the lightweight fraction issues from the top. To achieve a reasonable extraction yield, more than one cyclones are provided, and each bank of separators is fed from a pump that is equipped with an impeller of the open type because of the daubing and clogging nature of the liquid being pumped, to compel the pumped liquid forward at the proper speed for the crystals to become separated inside the cyclones. However, the speed (approximately 2800 RPM) of these pumps causes the crystals to crumble, making them more difficult to be separated in the cyclones. In this way, a substantial proportion of the tartrate crumbled by the impellers of the feed pumps driven at a high RPM are exhausted irretrievably from the cyclones. Also, frequent stops for maintenance and servicing, due to wear of the pumps and the cyclones from the abrasive action of the tartrate crystals, are necessary that involve considerable downtime costs.

Haushofer and Szmeliker suggest (XP 0010 63988 : "Die Förderung der Weinsteinausscheidung bei Weinen durch Zugabe von Impfkristallen, Kratzen an Glaswänden und Anwendung von Ultraschall", published in "Mitteilungen: Rebe, Wein, Obstbau und Früchteverwertung", 1973, vol. 23, no. 4, p. 259-284) the extraction of tartrate from wine using ultrasonic treatment.

The problem underlying the present invention is to provide a process for extracting calcium tartrate from wine making by-products and a plant for implementing the process, which can overcome the aforementioned drawbacks of the prior art.

This technical problem is solved according to the invention by a process as indicated and characterized in that it comprises the steps of vibrating the wine marc in a vat having a bottom with an outlet conduit, and of discharging the tartrate precipitate from the vat bottom.

It has been found that the tartrate crystals are extremely easy to precipitate from the liquid mass. This advantageous behavior may be ascribed to that the vibration nullifies, or at least reduces drastically, the friction between the tartrate crystals and the liquid in which the tartrate crystals are imprisoned.

Further features and advantages of the process according to this invention will be apparent from the following description of an embodiment thereof, given in relation to a plant for extracting calcium tartrate from wine-making by-products, by way of non-limitative example with reference to the accompanying drawings, in which:

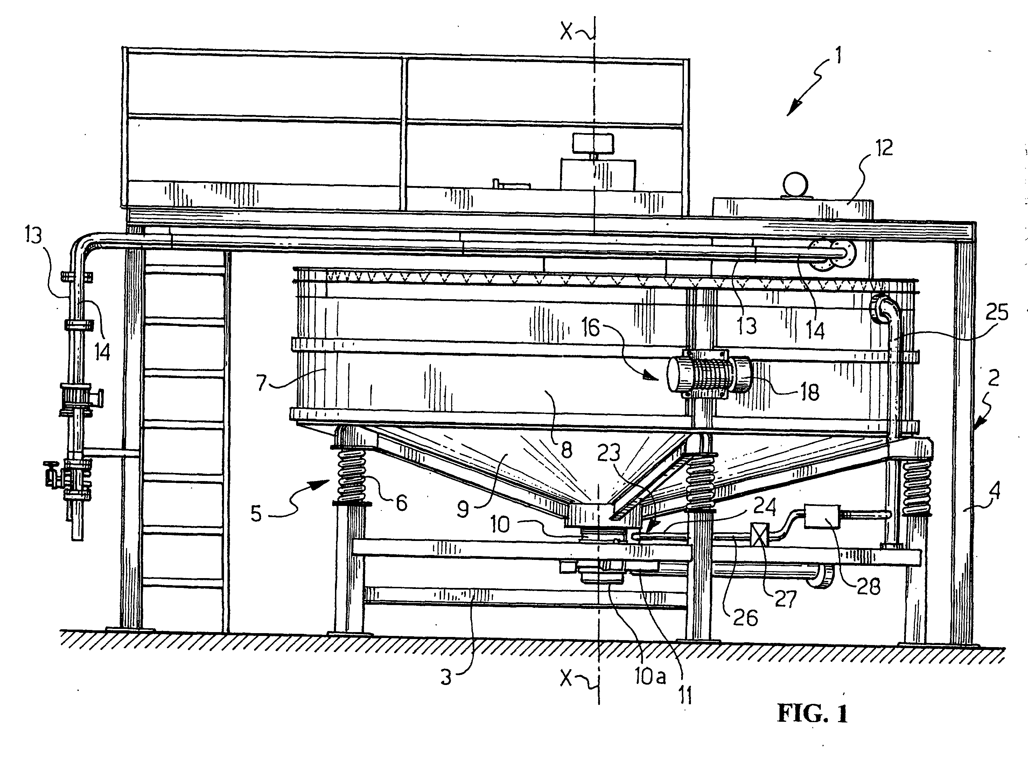

- Figure 1 is a schematic elevation view of a plant for extracting calcium tartrate from wine-making by-products, according to the invention;

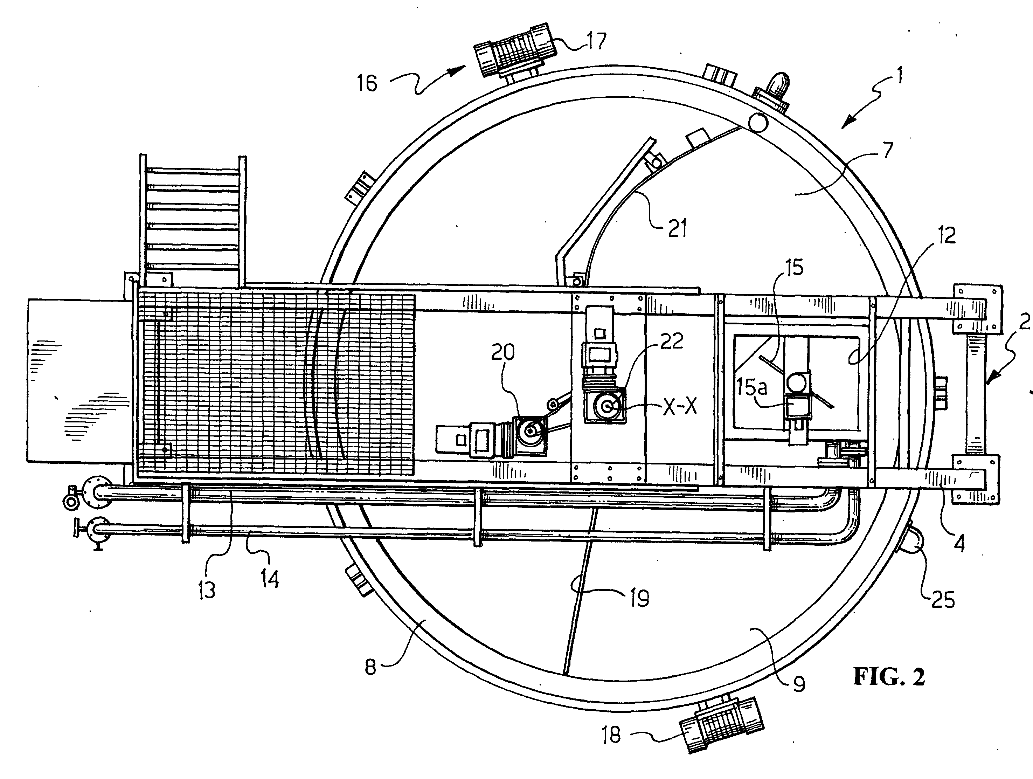

- Figure 2 is a schematic plan view of the plant shown in Figure 1;
- Figure 3 is an enlarged elevation view of a detail of the plant shown in Figure 1; and
- Figures 4 and 5 show the same detail as in Figure 3 at different stages of the plant operation.

With reference to the accompanying drawings, a plant according to the invention for extracting calcium tartrate from by-products of wine-making, such as dregs and marc, in particular wine marc, , is generally shown at 1.

The plant 1 includes a stationary frame 2, comprising a base 3 and a bridge structure 4 straddling the base 3.

A large capacity (e.g. 18 cubic meters) vat 7 is supported on the base 3 through spring members 5, such as springs 6. The vat 7 is open at the top and made up of a cylindrical wall 8, having an axis x-x, and a funnel-shaped bottom 9.

An outlet tubular conduit 10, having an outlet opening 10a, is centrally provided in the bottom 9 along the axis x-x. The conduit 10 includes an on/off valve 11, which may be a so-called "spider" valve, placed close to the outlet opening 10a.

A mixing tank 12 is supported on the bridge structure 4, above the vat 7, and has an open bottom to the vat. A wine marc feed pipe 13 and a liquid feed pipe 14, which liquid is preferably a distillery liquid used for diluting the wine marc, are led to the mixing tank 12.

A mixing rotor 15 is mounted inside the tank 12 and driven by a motor means 15a to mix the wine marc with the liquid, the mixture being then dumped into the vat 7.

It should be noted that the plant 1 according to the invention comprises a vibrator means 16 for vibrating the wine marc in the vat 7. In particular, the vibrator means 16 is associated with the vat 7 and comprises two vibrators 17 and 18, each of the rotating mass type and mounted at diametrically opposed locations on the exterior of the vat wall 8.

The two vibrators 17 and 18 vibrate the vat and, therefore, the wine marc therein. Unexpectedly, the best results have been obtained by rotating the vibrators in the same direction, thereby to produce an undulatory type of vibration.

Each vibrator, 17 and 18, is a commercially available component known *per se.* In this example, the vibrator of choice was one manufactured by the company Visam of Modena, Italy. The vibrators were tandem operated at 1500 RPM and 1.3 kWcd, and calibrated for 50 to 60% unbalance of the rotating mass.

The plant also includes a stirring rotor 19 supported by the bridge structure 4 and driven by a motor means 20 acting in the vat 7to keep the wine marc under slight agitation. The stirring rotor is rotated at an angular speed of a few RPM.

The system further includes a scraper means 21, a doctoring blade in this example, which is carried by the bridge structure 4 and driven by a motor means 22 to remove crystal sediment from the bottom 9 of the vat and convey it to the outlet conduit 10. The doctoring blade 21 is rotated at a few RPM.

Shown at 23 is a control means, which is placed along the outlet conduit 10 to monitor the presence of the calcium tartrate precipitated inside the tubular outlet conduit 10. This control means 23 comprises an inspection tube 24 that horizontally branches off the outlet conduit 10. The inspection tube 24 is placed a distance HO upstream the on/off valve 11.

An overflow pipe is shown at 25, which forms the discharge conduit for discharging the spent wine marc from the vat 7.

It should be noted that the wine marc flowing out through the inspection tube 24 is directed to the overflow pipe 25 by a conduit 26 that incorporates a driven-flow valve 27 and an electromagnetic flowmeter 28 indicating the wine marc outflow rate.

In operation, the diluted wine marc inside the vat, is preferably undulatory vibrated .

Such a vibration promotes the motion of the tartrate crystals within the liquid mass, and accordingly, aids in their precipitation to the vat bottom. The calcium tartrate collects at the location of the tubular outlet conduit 10 on the vat bottom, being assisted in this by the doctoring blade 21. Thus, a slug T of calcium tartrate crystals having a preset height H forms inside the tubular outlet conduit 10, close to the valve 11..

The on/off valve 11 is periodically opened to discharge the tartrate. The on/off valve is then closed after a predetermined time, in all cases before the slug level drops below the inspection tube 24, i.e. before the wine marc outflow through the inspection tube 24 indicates that no more than a slug TO having a height HO is left in the conduit. The height HO is selected such that the height of the residual slug will positively prevent the wine marc from flowing unrestrictedly out of the vat through the conduit, when the valve in the open position.

As the valve is quickly closed, the calcium tartrate will continue to build up until the spider valve is next opened.

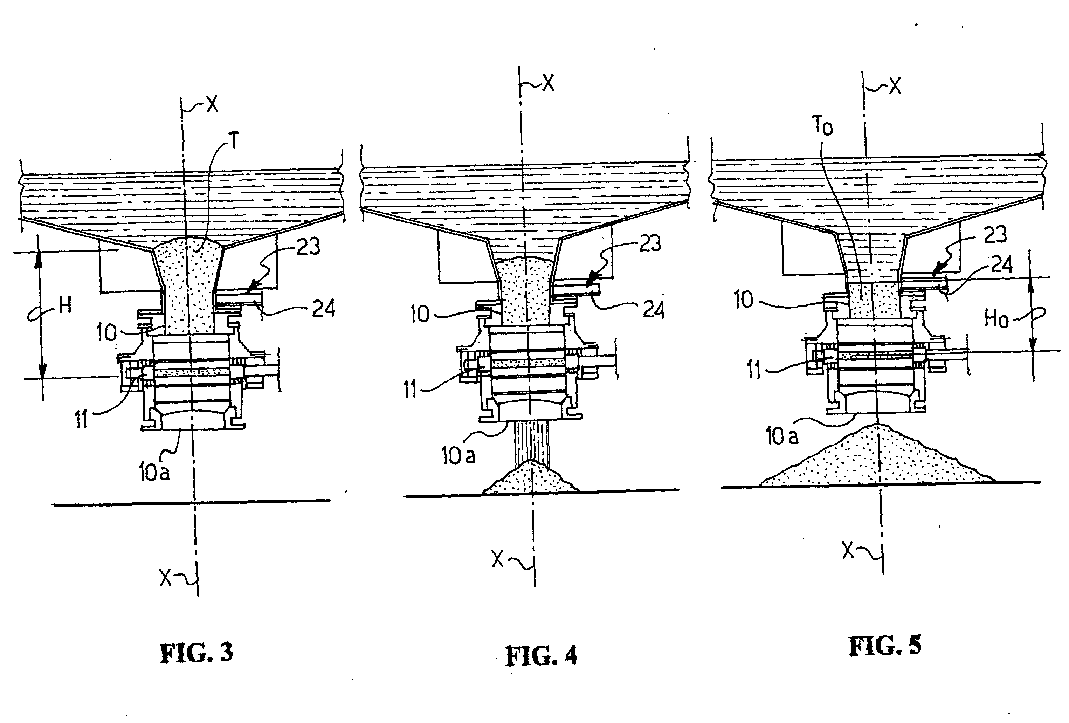

An improved process for extracting calcium tartrate from wine marc, dregs, or both, is implemented in the plant of this invention, which process comprises vibrating the wine marc, with a preferably undulatory vibration having suitable strength and frequency, inside a vat provided with an outlet conduit. According to this process, the calcium tartrate collects in the form of a slug T having a height H at the outlet conduit (see Figure 3), its precipitation from the mass of wine marc being facilitated by the attenuated friction between the crystals and the mass due to the vibration. At this stage, the spider valve is opened to let the tartrate out onto the ground (see Figure 4). As the height of the tartrate slug drops to be at the level of the inspection tube 24 and the wine marc begins to flow out through the inspection tube, the control means 23 allows the on/off valve 11 to be closed (see Figure 5). A major portion of the slug is then discharged, and a minor portion TO having a preset height HO is left in to prevent the wine marc from flowing out unrestrictedly from the vat.

According to the invention, this process comprises a preliminary step of diluting the wine marc with a distillery liquid, and mixing the wine marc with the liquid before transferring both into the vat. It should be noted that the inventive process only requires a wine marc-to-diluting liquid ratio of 1:1 to 1:1.5, resulting in low hydraulic loading for the plant.

A major advantage of the process and the plant of this invention is that the tartrate crystals are precipitated from the liquid mass with uncommon ease.

A further advantage is that the tartrate crystals sediment on the bottom under a condition of cleanliness, and hence purity, never met before with the improvement of the A.T. grade of the calcium tartrate. Also, it has been found in actual practice that the calcium tartrate appears in the form of substantially entire undamaged crystals.

In addition, the tartrate percent recovered has been found to be practically the whole amount, since this process avoids crumbling the tartrate and does not discharge it through the overflow pipe in powder form.

It should be also noted that the plant of the invention is a simple construction and cost-efficient. Long periods of operation are to be expected before maintenance and/or servicing become necessary. Since this plant has no parts spun within the wine marc, but relies on the effect of a constant undulatory motion, it can be regarded as a quiet plant having an indefinite lifespan.

## Claims

1. A process for extracting calcium tartrate from wine-making by-products, such as dregs and marc, in particular from wine marc, **characterized in that** it comprises the steps of vibrating the wine marc in a vat having a bottom and an outlet conduit, and of discharging the tartrate precipitate from the vat bottom.

2. A process according to Claim 1, **characterized in that** the vibratory motion is undulatory.

3. A process according to Claim 1, **characterized in that** it comprises a preliminary step of diluting the wine marc with a liquid and mixing the wine marc and the liquid together.

4. A process according to Claim 1, **characterized in that** it comprises the step of slightly stirring the wine marc in the vat.

5. A process according to Claim 1, **characterized in that** it comprises the step of scraping the tartrate precipitate from the bottom and dragging it to the outlet.

6. A process according to Claim 1, **characterized in that** it comprises the step of collecting the tartrate into the outlet conduit to form a slug and discharging a portion of the slug, leaving the remainder thereof to prevent the wine marc outflow.

7. A plant for extracting calcium tartrate from wine making byproduct, such as dregs and marc, in particular from wine marc, **characterized in that** it comprises a wine marc-containing vat (7) having a bottom (9) provided with an outlet conduit (10), and a vibrator means (16) associated with the vat (7).

8. A plant according to Claim 7, **characterized in that** said vibrator means (16) comprises two identical vibrators (17,18) being rotated in the same direction and mounted on the vat (7).

9. A plant according to Claim 8, **characterized in that** said vibrators (17,18) are operated at 1500 RPM and 1.3 kWcd.

10. A plant according to Claim 7, **characterized in that** it comprises a tank (12) placed at the top of the vat (7) for receiving the wine marc and a liquid, and a mixing rotor (15) acting inside the tank (12).

11. A plant according to Claim 7, **characterized in that** it comprises a stirring rotor (15) acting inside the vat (7).

12. A plant according to Claim 7, **characterized in that** it comprises a scraper means (21) acting on the bottom (9) of the vat (7).

13. A plant according to Claim 12, **characterized in that** it comprises a control means (23) for the wine marc flow provided along the outlet conduit (10).

14. A plant according to Claim 13, **characterized in that** it comprises an on/off valve (11) in the outlet conduit (10), said on/off valve being actuated to close by said control means (23).

## Patentansprüche

1. Verfahren zum Extrahieren von Kalziumtartrat aus Nebenprodukten der Weinherstellung, wie Bodensatz und Trester, insbesondere aus Weintrester, **dadurch gekennzeichnet, dass** dieses die Schritte des Vibrierens des Weintresters in einem Tank mit einem Boden und einer Auslassleitung und das Abführen des Tartratniederschlages von dem Tankboden umfasst.

2. Verfahren nach Anspruch 1, **dadurch gekennzeichnet, dass** die Vibrationsbewegung wellenförmig ist.

3. Verfahren nach Anspruch 1, **dadurch gekennzeichnet, dass** es einen vorausgehenden Schritt der Verdünnung des Weintresters mit einer Flüssigkeit und des Zusammenmischens des Weintresters mit der Flüssigkeit umfasst.

4. Verfahren nach Anspruch 1, **dadurch gekennzeichnet, dass** es einen Schritt des leichten Rührens des Weintresters in dem Trank umfasst.

5. Verfahren nach Anspruch 1, **dadurch gekennzeichnet, dass** es einen Schritt des Abschabens des Tartratniederschlages von dem Boden und des Schleppens des Tartratniederschlages zu dem Auslass umfasst.

6. Verfahren nach Anspruch 1, **dadurch gekennzeichnet, dass** es einen Schritt des Ansammelns des Tartrats in der Auslassleitung, um einen Pfropf zu bilden, und des Ausschleusen eines Teils des Pfropfes umfasst, wobei ein Rückstand hiervon zurückgelassen wird, um den Weintrester vor einem Abfluss zu bewahren.

7. Anlage zum Extrahieren von Kalziumtartrat aus Nebenprodukten der Weinherstellung, wie Bodensatz und Trester, insbesondere aus Weintrester, **dadurch gekennzeichnet, dass** diese einen Weintrester enthaltenen Tank (7) mit einem Boden (9), der mit einer Auslassleitung (10) versehen ist und ein fest dem Tank zugeordnetes Vibrationsmittel (16) umfasst.

8. Anlage nach Anspruch 7, **dadurch gekennzeichnet, dass** das Vibrationsmittel (16) zwei identische Vibratoren (17, 18) umfasst, die in der gleichen Richtung rotieren und an dem Tank (7) befestigt sind.

9. Anlage nach Anspruch 8, **dadurch gekennzeichnet, dass** die Vibratoren (17, 18), bei einer Drehzahl von 1500 Umdrehungen pro Minute und 1,3 kWcd getrieben werden.

10. Anlage nach Anspruch 7, **dadurch gekennzeichnet, dass** diese einen Behälter (12), der am oberen Ende des Tankes (7) angeordnet ist, der den Weintrester und eine Flüssigkeit aufnimmt und einen innerhalb des Behälters (12) arbeitenden Mischrotor (15) umfasst.

11. Anlage nach Anspruch 7, **dadurch gekennzeichnet, dass** diese einen innerhalb des Tankes (7) arbeitenden Rü hrrotor (15) umfasst.

12. Anlage nach Anspruch 7, **dadurch gekennzeichnet, dass** diese ein auf dem Boden (9) des Tankes (7) arbeitendes Abschabem ittel (21) umfasst.

13. Anlage nach Anspruch 12, **dadurch gekennzeichnet, dass** diese ein Steuermittel (23) für den Weintresterabfluss, der an der Auslassleitung (10) zur Verfügung gestellt wird, umfasst.

14. Anlage nach Anspruch 13, **dadurch gekennzeichnet, dass** diese ein Ein-/Aus-Ventil (11) in der Auslassleitung (10) umfasst, das für ein Schließen durch die Steuermittel (23) betrieben wird.

## Revendications

1. Un procédé pour extraire du tartrate de calcium à partir de sous-produits de la production vinicole tels que lies et marc, en particulier du marc de vin, **caractérisé en ce qu'**il comprend les étapes consistant à faire vibrer le marc de vin dans une cuve comportant un fond et un conduit de sortie, et d'évacuation du précipité de tartrate à partir du fond de la cuve.

2. Un procédé selon la revendication 1, **caractérisé en ce que** le mouvement vibratoire est ondulatoire.

3. Un procédé selon la revendication 1, **caractérisé en ce qu'**il comprend une étape préliminaire de dilution du marc de vin avec un liquide et de mélange ensemble du marc de vin et du liquide.

4. Un procédé selon la revendication 1, **caractérisé en ce qu'**il comprend l'étape de légère agitation du marc de vin dans la cuve.

5. Un procédé selon la revendication 1, **caractérisé en ce qu'**il comprend l'étape de raclage du précipité de tartrate depuis le fond, et d'entraînement vers la sortie.

6. Un procédé selon la revendication 1, **caractérisé en ce qu'**il comprend l'étape de recueil du tartrate dans la conduite de sortie pour former un bouchon, et d'évacuation d'une partie du bouchon en laissant le reste de celui-ci pour empêcher l'écoulement du marc de vin.

7. Une installation pour extraire du tartrate de calcium à partir de sous-produits de la production vinicole tels que lies et marc, en particulier du marc de vin, **caractérisé en ce qu'**il comprend une cuve (7) contenant du marc de vin, comportant un fond (9) pourvu d'un conduit de sortie (10), et un moyen vibrateur (16) associé à la cuve (7).

8. Une installation selon la revendication 7, **caractérisée en ce que** ledit moyen vibrateur (16) comprend deux vibrateurs identiques (17, 18) que l'on fait tourner dans le même sens et qui sont montés sur la cuve (7).

9. Une installation selon la revendication 8, **caractérisée en ce que** l'on fait fonctionner lesdits vibrateurs à 1500 t/min et 1,3 kWcd.

10. Une installation selon la revendication 7, **caractérisée en ce qu'**elle comprend un réservoir (12) placé au sommet de la cuve (7) pour recevoir le marc de vin et un liquide, ainsi qu'un rotor de mélange (15) agissant à l'intérieur du réservoir (12).

11. Une installation selon la revendication 7, **caractérisée en ce qu'**elle comprend un rotor d'agitation (15) agissant à l'intérieur de la cuve (7).

12. Une installation selon la revendication 7, **caractérisée en ce qu'**elle comprend un moyen racleur (21) agissant sur le fond (9) de la cuve (7).

13. Une installation selon la revendication 12, **caractérisée en ce qu'**elle comprend un moyen de commande (23) de l'écoulement du marc de vin, prévu le long du conduit de sortie (10).

14. Une installation selon la revendication 13, **caractérisée en ce qu'**elle comprend une vanne tout-ou-rien (11) dans le conduit de sortie (10), cette vanne tout-ou-rien étant actionnée à la fermeture par ledit moyen de commande (23).
